# FASCICULE DE BREVET EUROPEEN

(11) **EP 2 688 790 B1**
(45) Date de publication et mention de la délivrance du brevet: **29.04.2015**
(21) Numéro de dépôt: 12711953.5
(22) Date de dépôt: 28.02.2012
(51) Int. Cl.: B62D 25/10, B62D 25/12, E05C 17/12, E05C 17/04

(54) **BEQUILLE DEFORMABLE POUR CAPOT DE VEHICULE**
VERFORMBARE STREBE FÜR DIE MOTORHAUBE EINES FAHRZEUGES
DEFORMABLE PROP FOR VEHICLE BONNET

(30) Priorité: 25.03.2011 FR 1152503
(43) Date de publication de la demande: 29.01.2014
(73) Titulaire: Peugeot Citroën Automobiles SA, 78140 Vélizy Villacoublay (FR)
(72) Inventeur: BARBIER, Julien, F-94800 Villejuif (FR); MATHOU, Laurent, F-94220 Charenton Le Pont (FR)
(74) Mandataire: Ménès, Catherine
(86) Numéro de dépôt international: PCT/FR2012/050415
(87) Numéro de publication internationale: WO 2012/131203

(56) Documents cités:
- EP-A1- 2 239 167
- FR-A1- 2 945 504
- US-A1- 2006 082 164

## Description

L'invention a trait à une béquille de maintien en position ouverte d'un capot de véhicule motorisé. L'invention a trait également à un dispositif de maintien d'un capot d'un véhicule motorisé. L'invention a également trait à un véhicule équipé d'une telle béquille et/ou d'un tel dispositif.

Pour en faciliter l'entretien, les véhicules motorisés sont équipés de capots mobiles. Pour des raisons de résistance mécanique ou d'esthétique ces ouvrants ont une valeur importante. Leur éventuel remplacement coûte cher en fourniture et en main d'oeuvre. D'un point de vue entreprise, leur dégradation, ne fut-ce qu'accidentelle nuit à l'image de marque et à la qualité perçue. Pour garantir la sécurité d'utilisation, les capots sont munis de béquille - constituant un dispositif de maintien de sécurité. Elle doit être compacte pour libérer au maximum l'espace de travail. Cette sécurité permet d'intervenir sur un véhicule sans qu'il y ait besoin de maintenir manuellement l'ouvrant ou d'intercaler un objet à l'efficacité hasardeuse. Une chute accidentelle du capot sur une personne peut provoquer de graves blessures. Le maintien de sécurité doit être facilement manoeuvrable, soutenir efficacement le capot et rester stable dans sa position. Un autre cas de figure est à envisager: la fermeture forcée. Elle se produit lorsque l'utilisateur tente de manoeuvrer le capot alors que la béquille est en position de maintien. Suivant sa force, l'utilisateur risque de tordre le capot. Par la suite cette déformation peut rendre impossible la fermeture dudit capot ; et à l'extrême, interdire la circulation autonome du véhicule vers un centre de réparation.

Ce genre de cas est particulièrement dommageable pour l'utilisateur du véhicule. Une solution serait de renforcer le capot en augmentant son épaisseur ou de rajouter des renforts rigides ; mais cette alternative contribue à augmenter le poids du véhicule ce qui est contraire à la philosophie actuelle. Il convient donc de trouver une solution efficace, simple, sécurisante et idéalement économe.

Les solutions existantes ont recours à une barre de sécurité fixe et rigide qui maintien l'ouvrant. Ces solutions permettent de maintenir l'ouvrant mais pas d'éviter sa déformation irréversible en cas de fermeture accidentelle alors que la barre de sécurité est encore en position de maintien.

Le brevet DE202005013283U présente un capot de voiture dont l'ouverture est assistée par un vérin à gaz. Une fois ouvert le capot peut être maintenu en position haute par une tige de maintien. Le vérin à gaz et la tige reposent sur un support fixe rigide et maintiennent le capot en position ouverte grâce à son point d'attache. Ce point d'attache est l'extrémité d'un rigidificateur positionné entre le pivot de l'ouvrant et l'endroit sur lequel appuierait une personne qui veut fermer le capot. Si le vérin à gaz devait se bloquer ou si la tige de maintien n'était pas rabattue, on réaliserait une flexion trois points du capot. De plus, l'utilisation de vérins à gaz implique un surcoût par rapport à une béquille classique, ce surcoût pouvant être pénalisant notamment pour des véhicules bon marché.

Le brevet US 2006/0082164 A1 prévoit une tige entre le capot et le cadre pour garantir l'ouverture à un angle souhaité. L'ensemble étant rigide, le capot risque également de se voiler en cas de fermeture forcée. Suivant la configuration présentée consistant à laisser un maximum d'espace libre, la force de levier peut suffire à dégrader l'ouvrant.

L'objectif de la présente invention est de pallier tout ou partie des contraintes et problèmes énumérées ci-dessus. L'optique de la solution présentée est de rester cohérent avec les contraintes contemporaines d'un constructeur automobile. Les véhicules ont besoin de barres de maintien de leurs ouvrants pour garantir une sécurité en position ouverte. En parallèle, ces sécurités doivent limiter les conséquences d'une utilisation maladroite d'un ouvrant.

On connaît par FR 2945504, une béquille articulée de maintien de capot d'un véhicule: ce document a été pris à base du préambule de la revendication 1 de la demande.

L'invention a pour objet une béquille articulée de maintien de capot d'un véhicule, remarquable en ce qu'elle comporte une partie coudée apte à se déformer plastiquement sous l'application d'un effort de compression à ses extrémités qui est supérieur ou égal à 10 daN, préférentiellement 15 daN, plus préférentiellement encore 20 daN, ledit effort correspondant à une fermeture forcée du capot. Suivant les configurations de capot, cet effort peut également être supérieur ou égal à 25 daN, 30 daN ou encore 35 daN.

Selon un mode avantageux de l'invention, la partie coudée est à distance de ses extrémités et comprend au moins un coude formant au moins un angle inférieur ou égal à 140°, préférentiellement 130°, plus préférentiellement encore 120°. La partie coudée est préférentiellement distante d'au moins 50 mm, plus préférentiellement 100 mm, plus préférentiellement encore 150 mm, de chaque extrémité.

Selon un autre mode avantageux de l'invention, la partie coudée comprend un segment généralement droit formant avec le reste de la béquille au moins deux angles distants l'un de l'autre. Le tronçon droit mesure préférentiellement au moins 50 mm, plus préférentiellement 100 mm, plus préférentiellement encore 150 mm.

L'invention a également pour objet un dispositif de maintien d'un capot comprenant le capot, une béquille articulée et un support, remarquable en ce que le béquille est conforme à l'invention.

Le support est matérialisé par l'aile de passage d'une des roues avant. Le support est apte à résister à tous les efforts mécaniques exercés par la béquille. La béquille est fixée au support du véhicule par une liaison pivot ou une liaison rotule. La béquille est préférentiellement un profilé métallique rond.

Selon un mode avantageux de l'invention, la béquille est apte à se déformer de manière plastique sous l'action d'un effort manuel de fermeture du capot alors que le capot se déforme exclusivement de manière élastique.

Selon un autre mode avantageux de l'invention, le ou les coudes de la partie coudée sont aptes à se déformer de manière plastique lors de la fermeture forcée du capot.

Selon un encore autre mode avantageux de l'invention, la partie coudée comprend un segment compris entre deux coudes, ledit segment étant apte à se déformer en torsion de manière plastique lors de la fermeture forcée du capot.

Selon un encore autre mode avantageux de l'invention, le ou les coudes de la partie coudée sont configurés de telle sorte que la béquille se déforme sans sortir du contour du capot de manière à ne pas endommager le véhicule lors de la fermeture forcée du capot.

Selon un encore autre mode avantageux de l'invention, la partie coudée est configurée pour se déformer sans rupture jusqu'à la fermeture complète du capot. Selon un encore autre mode avantageux de l'invention, la partie coudée est configurée pour pouvoir être redressée et pour reprendre sa forme originelle sans que la béquille ne se rompe après une déformation résultant de la fermeture forcée du capot.

Selon un encore autre mode avantageux de l'invention, après une déformation résultant d'une fermeture forcée partielle du capot la béquille reste apte à soutenir le capot en position ouverte.

La béquille est préférentiellement constituée d'un profilé métallique de section ronde. Elle peut éventuellement être constituée d'un profilé carré ou hexagonal. Le métal retenu est l'acier. Il peut être remplacé par un alliage léger ou par de l'aluminium.

Selon un autre mode avantageux de l'invention la partie centrale de la béquille reçoit plusieurs coudes qui ne sont pas nécessairement équidistants. Les axes de torsion des coudes ne sont pas nécessairement colinéaires de manière à ce que la tige puisse se plier de manière compacte.

Selon un autre mode avantageux de l'invention cette béquille est réalisée à partir d'un profilé d'un seul diamètre. Il peut être réalisé à partir de plusieurs profilés de forme et diamètre différent et être soudés les uns aux autres de manière à matérialiser la forme souhaitée.

Selon un autre mode avantageux de l'invention la béquille peut également être constituée de différents matériaux: conserver une partie centrale avec un matériau déformable et des extrémités en matériaux plus légers : aluminium, polymères ou matériaux composites. L'assemblage est adapté au couple réalisé. On peut envisager un vissage bout-à-bout, un emmanchement et encastrement, un collage, un rivetage. Cette liste n'est pas limitative.

L'invention a également pour objet un véhicule comprenant une béquille et/ou un dispositif de maintien du capot remarquable en ce que la béquille est conforme à l'invention et/ou le dispositif est conforme à l'invention.

Grâce aux mesures sus mentionnées, en cas de fermeture forcée accidentelle de l'ouvrant, son intégrité n'est pas atteinte. Il reste fonctionnel, et les éventuels frais de réparations sont minimes. En effet, l'éventuel changement de la tige est moins cher que le remplacement d'un capot. En cas de faible déformation, la pièce peut aisément être redressée avec un outillage simple. En cas de déformation plus prononcée, on préférera malgré tout remplacer la tige.

La solution retenue présente également l'avantage de ne pas alourdir le véhicule : les composants sont des ensembles mécaniques simples à réaliser et à monter. De ce fait ils restent économes.

D'autres particularités et avantages de l'invention seront mieux compris à l'aide de la description des figures parmi lesquelles :
- La figure 1 est une représentation d'un véhicule ayant son capot ouvert. Y sont représentés la béquille et le capot qu'elle soutien.
- La figure 2 est une représentation du capot soutenu par la béquille selon l'invention. Le support de la béquille est également représenté.
- La figure 3 est une représentation similaire à celle de la figure 2 après une manoeuvre de fermeture forcée du capot.
- La figure 4 est une représentation détaillée de la béquille avec une définition des différents segments ainsi que des coudes et des angles respectifs.

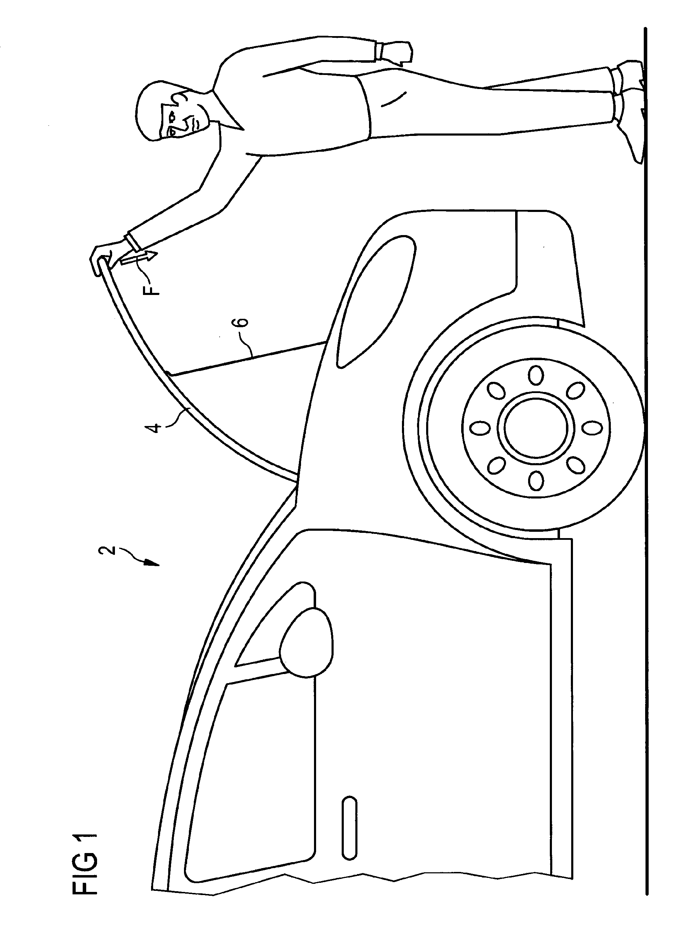

Le véhicule 2 représenté sur la figure 1 comprend un capot 4 qui peut être en position fermée ou ouverte pour accéder au moteur. Pour rester en position le capot 4 est maintenu par une béquille 6. Cette béquille 6 est mobile et peut être soit rangée sous le capot 4, soit relevée en position de fixation du capot 4 à une position angulaire souhaitée. La béquille 6 est fixée au capot 4 entre la liaison pivot du capot 4 et son l'extrémité avant. De ce fait le capot 4 constitue un bras de levier qui multiplie tout effort exercé en son extrémité sur la béquille 6. De plus, la béquille 6 n'est pas nécessairement positionnée perpendiculairement au capot 4. Par conséquent tout effort transmis par le capot 4 au point 24 sur la béquille 6 donne une résultante démultipliée dans la béquille 6. Ainsi un effort de fermeture forcée de 8 à 15 daN à l'extrémité du capot 4 peut générer une résultante de 20 à 50 daN dans la béquille.

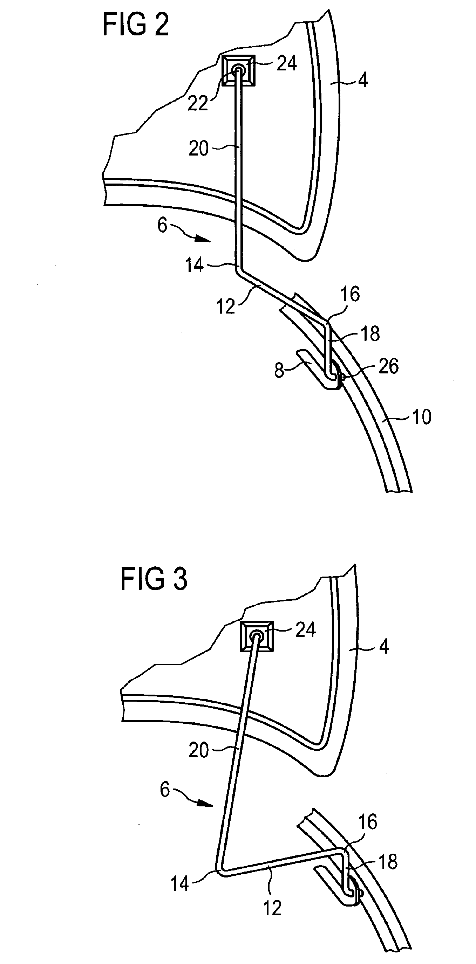

La figure 2 présente le capot 6 en position ouverte et la béquille assurant son rôle de maintien de sécurité. Sa base 26 est reliée au support 10 via une liaison pivot 8. A son extrémité supérieure, la béquille 6 présente un crochet 22 apte à s'engager dans l'encoche 24 du capot 4 de manière à assurer un blocage du capot 4 contre tout rabattement involontaire ou accidentel. La stabilité de cette liaison entre le crochet 22 et l'encoche 24 est garante de la sécurité d'utilisation du capot 4 pour toute personne se trouvant sous cet organe. La particularité de cette figure est qu'elle présente la béquille 6 intacte; telle qu'elle est lorsque la voiture sort de l'usine.

La béquille présente en extrémité basse une partie 26 apte à réaliser une liaison pivot ou rotule avec la platine 8. Cette liaison permet de manipuler la béquille 6 entre ses positions haute et basse et de venir loger le crochet 22 dans l'encoche 24 sans effort. Ce crochet 22 constitue la seconde extrémité de la béquille 6. Les extrémités 22 et 26 sont des appuis ponctuels ; ils ne se déforment pas en cas d'effort exercés sur le capot 4.

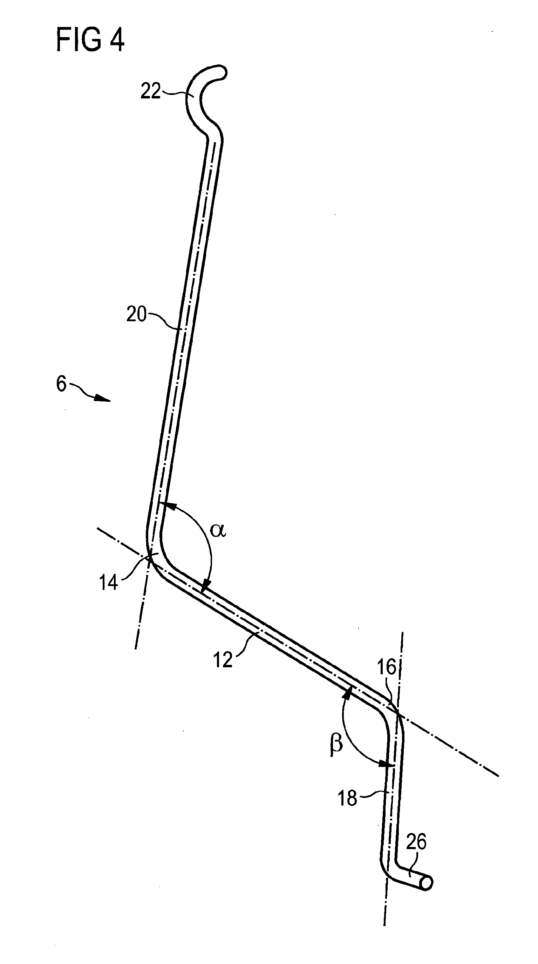

Comme cela est illustré de manière plus détaillée à la figure 4, le corps de la béquille 6 présente en sa partie médiane trois segments 18, 12, 20 et deux coudes 14, 16. Les trois segments 18, 12, 20 sont généralement coplanaires. Dans le cas contraire, le segment 12 délimité par les coudes 14, 16 travaille en torsion axiale. Le coude 14 décrit un angle α entre les segments 12 et 20. Le coude 16 forme un angle β entre les segments 12 et 18. Ces angles sont les paramètres qui évoluent suite à une fermeture forcée.

La figure 3 présente le dispositif de maintien après une manoeuvre de fermeture forcée du capot 4. L'angle d'ouverture est inférieur à celui de la figure précédente. La béquille 6 s'est déformée de manière plastique tandis que le capot 4 a subi uniquement des déformations élastiques.

Les segments 12, 18, 20 constituent des leviers qui concentrent les efforts de flexion dans les coudes 14, 16. La longueur des segments 12, 18, 20 augmente proportionnellement à leur longueur l'effort de flexion dans les coudes 14, 16. La diminution des angles α, β jusqu'à une valeur d'approximativement 90° augmente la résultante de flexion générée par une force de compression exercée sur la béquille. Les différentes longueurs des segments 12, 18, 20 produisent des déformations angulaires différentes ou égales dans les coudes 14, 16. Les coudes 14, 16 et segments 12, 18, 20 ont des angles et des longueurs qui prennent également en compte l'intégration de la béquille 6 dans le bloc moteur.

## Revendications

1. Béquille articulée (6) de maintien de capot (4) d'un véhicule (2), **caractérisée en ce qu'**elle comporte une partie coudée (12, 14, 16) apte à se déformer plastiquement sous l'application d'un effort de compression à ses extrémités supérieur ou égal à 10 daN, préférentiellement 15 daN, plus préférentiellement encore 20 daN, ledit effort correspondant à une fermeture forcée du capot.

2. Béquille (6) selon la revendication 1, **caractérisée en ce que** la partie coudée (12, 14, 16) est à distance de ses extrémités (22, 26) et comprend au moins un coude formant au moins un angle inférieur ou égal à 140°, préférentiellement 130°, plus préférentiellement encore 120°.

3. Béquille (6) selon l'une des revendications 1 et 2, **caractérisée en ce que** la partie coudée (12, 14, 16) comprend un segment généralement droit (12) formant avec le reste de la béquille (6) au moins deux angles (14, 16) distants l'un de l'autre.

4. Dispositif de maintien d'un capot (4) d'un véhicule motorisé comprenant un capot oscillant, une béquille (6) articulée et un support (10) **caractérisé en ce que** la béquille (6) est conforme à l'une des revendications 1 à 3.

5. Dispositif selon la revendication 4, **caractérisé en ce que** la béquille (6) est apte à se déformer de manière plastique sous l'action d'un effort manuel de fermeture du capot (4) alors que le capot (4) se déforme exclusivement de manière élastique.

6. Dispositif selon les revendications 4 et 5 **caractérisé en ce que** le ou les coudes (14, 16) de la partie coudée (12, 14, 16) sont aptes à se déformer de manière plastique lors de la fermeture forcée du capot (4).

7. Dispositif selon les revendications 4 à 6 **caractérisé en ce que** la partie coudée comprend un segment (12) compris entre 2 coudes (14, 16), ledit segment étant apte à se déformer en torsion de manière plastique lors de la fermeture forcée du capot (4).

8. Dispositif selon l'une des revendications 4 à 7 **caractérisé en ce que** le ou les coudes (14, 16) de la partie coudée (12, 14, 16) sont configurés de telle sorte que la béquille (6) se déforme sans sortir du contour du capot (4) de manière à ne pas endommager le véhicule (2) lors de la fermeture forcée du capot (4).

9. Dispositif selon l'une des revendications 4 à 8 **caractérisé en ce que** la partie coudée (12, 14, 16) est configurée pour se déformer sans rupture jusqu'à la fermeture complète du capot (4).

10. Dispositif selon les revendications 4 à 9 **caractérisé en ce que** la partie coudée est configurée pour pouvoir être redressée pour reprendre sa forme originelle sans que la béquille (6) ne se rompe après une déformation résultant de la fermeture forcée du capot.

11. Véhicule (2) comprenant une béquille et/ou un dispositif de maintien du capot **caractérisé en ce que** la béquille est conforme à l'une des revendications 1 à 3 et/ou le dispositif est conforme à l'une des revendications 4 à 10.

## Patentansprüche

1. Gelenkstrebe (6) zum Halten einer Motorhaube (4) eines Fahrzeugs (2), **dadurch gekennzeichnet, dass** sie einen abgewinkelten Teil (12, 14, 16) aufweist, der geeignet ist, um sich unter der Anlegen an seinem Enden einer Kompressionskraft größer oder gleich 10 daN, vorzugsweise 15 daN, noch bevorzugter 20 daN plastisch zu verformen, wobei die Kraft einem forcierten Schließen der Motorhaube entspricht.

2. Strebe (6) nach Anspruch 1, **dadurch gekennzeichnet, dass** der abgewinkelte Teil (12, 14, 16) in Entfernung von den Enden (22, 26) liegt und mindestens ein Winkelstück aufweist, das mindestens einen Winkel kleiner oder gleichen 140°, vorzugsweise 130°, noch bevorzugter 120° bildet.

3. Strebe (6) nach einem der Ansprüche 1 und 2, **dadurch gekennzeichnet, dass** der abgewinkelte Teil (12, 14, 16) ein allgemein gerades Segment (12) aufweist, das mit dem Rest der Strebe (6) mindestens zwei Winkel (14, 16), die voneinander beabstandet sind, bildet.

4. Haltevorrichtung einer Motorhaube (4) eines Kraftfahrzeugs, das eine oszillierende Motorhaube, eine Gelenkstrebe (6) und einen Träger (10) aufweist, **dadurch gekennzeichnet, dass** die Strebe (6) einem der Ansprüche 1 bis 3 entspricht.

5. Vorrichtung nach Anspruch 4, **dadurch gekennzeichnet, dass** die Strebe (6) geeignet ist, um sich unter der Einwirkung einer manuellen Schließkraft der Motorhaube (4) plastisch zu verformen, während sich die Motorhaube (4) ausschließlich elastisch verformt.

6. Vorrichtung nach den Ansprüchen 4 und 5, **dadurch gekennzeichnet, dass** das oder die Winkelstücke (14, 16) des abgewinkelten Teils (12, 14, 16) geeignet sind, um sich beim forcierten Schließen der Motorhaube (4) plastisch zu verformen.

7. Vorrichtung nach den Ansprüchen 4 des 6, **dadurch gekennzeichnet, dass** der abgewinkelte Teil ein Segment (12) zwischen 2 Winkelstücken (14, 16) aufweist, wobei das Segment geeignet ist, um sich in Torsion bei dem forcierten Schließen der Motorhaube (4) plastisch zu verformen.

8. Vorrichtung nach einem der Ansprüche 4 bis 7, **dadurch gekennzeichnet, dass** das oder die Winkelstücke (14, 16) des abgewinkelten Teils (12, 14, 16) derart ausgelegt sind, dass sich die Strebe (6) verformt, ohne aus der Kontur der Motorhaube (4) auszutreten, so dass das Fahrzeug (2) beim forcierten Schließen der Motorhaube (4) nicht beschädigt wird.

9. Vorrichtung nach einem der Ansprüche 4 bis 8, **dadurch gekennzeichnet, dass** der abgewinkelte Teil (12, 14, 16) konfiguriert ist, um sich ohne Bruch bis zum kompletten Schließen der Motorhaube (4) zu verformen.

10. Vorrichtung nach den Ansprüchen 4 bis 9, **dadurch gekennzeichnet, dass** der abgewinkelte Teil ausgelegt ist, um gleichgerichtet werden zu können, um seine ursprüngliche Form wieder anzunehmen, ohne dass die Strebe (6) nach einer Verformung, die aus dem forcierten Schließen der Motorhaube resultiert, bricht.

11. Fahrzeug (2), das eine Strebe und/oder eine Haltevorrichtung der Motorhaube aufweist, **dadurch gekennzeichnet, dass** die Strebe einem der Ansprüche 1 bis 3 entspricht und/oder die Vorrichtung einem der Ansprüche 4 bis 10 entspricht.

## Claims

1. An articulated prop (6) for holding up a bonnet (4) of a vehicle (2), **characterized in that** it comprises a bent part (12, 14, 16) able to deform plastically under the application of a compression stress at its upper ends or equal to 10 daN, preferably 15 daN, even more preferably 20 daN, said stress corresponding to a forced closure of the bonnet.

2. The prop (6) according to Claim 1, **characterized in that** the bent part (12, 14, 16) is at a distance from its ends (22, 26) and includes at least one elbow forming at least one angle less than or equal to 140°, preferably 130°, even more preferably 120°.

3. The prop (6) according to one of Claims 1 and 2, **characterized in that** the bent part (12, 14, 16) includes a generally straight segment (12) forming with the remainder of the prop (6) at least two angles (14, 16) remote from one another.

4. A device for holding up a bonnet (4) of a motorised vehicle including a swinging bonnet, an articulated prop (6) and a support (10) **characterized in that** the prop (6) is in accordance with one of Claims 1 to 3.

5. The device according to Claim 4, **characterized in that** the prop (6) is able to deform in a plastic manner under the action of a manual closure force of the bonnet (4) while the bonnet (4) deforms exclusively in an elastic manner.

6. The device according to Claims 4 and 5, **characterized in that** the elbow(s) (14, 16) of the bent part (12, 14, 16) are able to deform in a plastic manner on the forced closure of the bonnet (4).

7. The device according to Claims 4 to 6, **characterized in that** the bent part includes a segment (12) comprised between 2 elbows (14, 16), said segment being able to deform torsionally in a plastic manner on the forced closure of the bonnet (4).

8. The device according to one of Claims 4 to 7, **characterized in that** the elbow (s) (14, 16) of the bent part (12, 14, 16) are configured such that the prop (6) deforms without leaving the contour of the bonnet (4) so as not to damage the vehicle (2) on the forced closure of the bonnet (4).

9. The device according to one of Claims 4 to 8, **characterized in that** the bent part (12, 14, 16) is configured to deform without breaking up to the complete closure of the bonnet (4).

10. The device according to Claims 4 to 9, **characterized in that** the bent part is configured to be able to be re-formed to resume its original shape without the prop (6) breaking after a deformation resulting from the forced closure of the bonnet.

11. A vehicle (2) including a prop and/or a device for holding up the bonnet, **characterized in that** the prop is in accordance with one of Claims 1 to 3 and/or the device is in accordance with one of Claims 4 to 10.
